# EUROPEAN PATENT SPECIFICATION

(11) **EP 1 606 989 B1**
(45) Date of publication and mention of the grant of the patent: **31.10.2007**
(21) Application number: 05105305.6
(22) Date of filing: 16.06.2005
(51) Int. Cl.: A01D 45/26, A01D 45/28

(54) **Harvesting machine for tuft vegetables**
Erntemaschine für Gemüse mit Büschel
Machine de récolte de légumes à feuilles en bouquet

(30) Priority: 17.06.2004 IT VI20040148
(43) Date of publication of application: 21.12.2005
(73) Proprietor: Piva, Tiziano, 35020 Arre (PD) (IT); Piva, Alberto, 35020 Arre (PD) (IT); Gallo, Nicola, 35020 Candiana (PD) (IT); Gallo, Emanuela, 35020 Candiana (PD) (IT)
(72) Inventor: Piva, Tiziano, 35020 Arre (PD) (IT); Piva, Alberto, 35020 Arre (PD) (IT); Gallo, Nicola, 35020 Candiana (PD) (IT); Gallo, Emanuela, 35020 Candiana (PD) (IT)
(74) Representative: Bonini, Ercole

(56) References cited:
- WO-A-99/09804
- GB-A- 1 403 361
- US-A- 5 846 129
- US-B1- 6 820 404

## Description

The present invention is about a harvesting machine suitable in particular to be used for harvesting tuft vegetables.

As it is known, the harvesting of tuft leaf vegetables with small and enveloped leaves, like for example valerian, spinach, Chinese cabbage, lettuce and others, consists of cutting each single plant at the root, below the collar, to maintain the leaves joined together.

The harvested vegetables are then manually disposed inside containers, like for example boxes or bags, in order to be marketed.

Particular harvesting machines, self-propelled and/or towed on the harvesting field by agricultural vehicles, are available on the market for harvesting these and other types of vegetables.

All the harvesting machines belonging to the prior art (see e.g. US-A-5 846 129), although in their different specific executive embodiments, substantially consist of a bearing structure mounted on wheels or moved by agricultural vehicles, provided with a front mowing assembly comprising a mowing blade orthogonally disposed with respect to the advancement direction of the machine.

A conveying surface, loop-wound and connected to mechanisms able to put it in rotation, is present downstream the mowing assembly, said conveying surface consisting of a plurality of combs disposed parallel to each other, able to pick up the vegetables cut downstream the mowing assembly and to convey them to an unloading area located on said bearing structure.

Each comb has the body consisting of a flat and rigid section bar, whose ends are connected to the aforementioned mechanisms of the conveying surface through coupling means of known per se type.

A plurality of substantially L shaped rigid teeth, whose smaller side is connected to the comb body while the greater side protrudes from the body, is coupled with the body of each comb.

The mechanisms comprise a pair of chains, each of them being loop-wound around rolling means supported by the bearing structure of the machine and comprising a guiding plate disposed at the loading area of the conveying surface and toothed wheels engaging with the chains disposed at the unloading area.

Operatively, the mowing blade is brought near to the soil at the cutting point which, according to the type of the vegetable to be harvested, can be above or below the soil level.

The alternate movement of the mowing blade thus performs the cutting operation of the seedlings at the collar, maintaining the leaves joined together as mentioned hereinafter.

Subsequently, the seedlings are picked up through the rigid teeth of each comb of the conveying surface which vertically lifts by rotation said seedlings, placing them in the spaces defined between the teeth and conveying them in the unloading area of the bearing structure.

In this way, the seedlings are conveyed from the loading area, downstream the mowing assembly, to the unloading area, being maintained in a vertical position in order to allow the earth to be detached and to fall downward, thus making easier the work of the operator who picks them up from the conveying surface and puts them in proper containers.

A harvesting machine having the aforementioned characteristics is described in the Italian Patent application no. VI2003A000257, filed by the same applicants of the present application.

However, the known harvesting machines have some acknowledged inconveniences.

A first inconvenience is due to the risk of accident for the operator who picks up the seedlings from the conveying surface when this operation is performed with said surface in motion.

Indeed, the conveying surface consists of a plurality of flat and rigid section bars, generally made of metallic material, mutually spaced and connected to two chains that allow their movement.

As a consequence, when the seedlings placed in each comb have to be picked up, there is the risk for the operator to have his fingers trapped in the free space between a section bar and the subsequent one, and/or to be injured by the rigid teeth.

For these reasons, in the cited known embodiments is preferable to perform the collecting operation of the seedling from the conveying surface by stopping the advancement of said surface, with a consequent productivity decrease of the machine.

Another inconvenience is due to the fact that the mechanisms consisting of the pair of chains coupled with the end of each section bar require a frequent maintenance.

The need to maintain the chains and other mechanical components of the mechanisms which put in motion the conveying surface is made more evident by the hard conditions in which the machine has to operate.

Indeed, in such machines the chains and other transmission components are continuously put in contact with earth, sand and humidity, thus requiring a frequent cleaning and lubrification of the parts forming them.

A further inconvenience, related to the preceding one, is due to the need to replace, with a certain frequency, the chains actuating the combs, because of the strong wear due to the presence of sand and earth they undergo during the harvesting machine normal operation.

Another inconvenience is due to the constructional complexity required to make a conveying surface having the aforementioned characteristics, evidently involving a considerable weight too and consequently the need to properly dimension all the machine parts.

The present invention intends to eliminate the aforementioned inconveniences. It is a first object of the invention to provide for a harvesting machine for vegetables in which the vegetables can be picked up from the conveying surface in an easy way and without safety risks for the operator employed on such operation, while the conveying surface is maintained in motion.

It is another object of the invention to provide for a harvesting machine which does not require particular maintenance operations for the conveying surface of the vegetables.

It is a further object of the invention to provide for a harvesting machine which is constructively easier and lighter with respect to the cited prior art.

Said objects are obtained by providing for a harvesting machine for vegetables which, according to the main claim, comprises:
- a bearing structure mounted on rolling means;
- a mowing assembly disposed in the front part of said bearing structure, aligned in a substantially horizontal direction, orthogonal to the advancement direction of said machine;
- a conveying surface consisting of a plurality of combs disposed parallel to each other, able to pick up the material cut downstream said mowing assembly and to convey it to an unloading area disposed on said bearing structure,
and it is characterized in that said conveying surface comprises at least a belt loop-wound around rotation means, wherein each of said combs is made of a plurality of mainly longitudinally developed flexible laminar bodies, transversally disposed with respect to said belt, said laminar bodies having an edge on their length fastened to said belt and the opposite edge provided with a plurality of harvesting teeth.

Advantageously, the presence of a conveying surface consisting of a loop-wound belt makes safer to directly pick up the seedlings from the belt, preventing the operator's fingers to remain trapped between the combs, as happens in the cited known embodiments.

More advantageously, the presence of the conveying belt loop-wound around rotation means does not require the presence of particularly wearable mechanisms, as happens instead for the chains applied to the cited known embodiments.

Still advantageously, the presence of combs made of laminar bodies provided with flexible teeth makes safer to pick up the seedlings from the conveying surface, preventing that the operator is injured by the comb teeth, as happens in the cited known embodiments in which the teeth coupled with the section bars are rigid and not flexible.

The aforesaid objects and advantages will be better highlighted in the description of a preferred embodiment of the invention, given in an explanatory and not limiting way, with reference to the figures of the annexed drawings, wherein:
- Figure 1 is an axonometric view of the harvesting machine of the invention;
- Figure 2 shows an enlarged detail of the machine of Figure 1;
- Figure 3 shows an enlarged detail of Figure 2;
- Figure 4 shows another executive embodiment of the machine of Figure 1;
- Figure 5 is a side sectional view of a detail of the machine of Figure 1;
- Figure 6 is a side sectional view of a detail of the machine of Figure 1 during an operation stage;
- Figure 7 is a further enlarged detail of Figure 1; and
- Figure 8 is a side view of the machine of Figure 1.

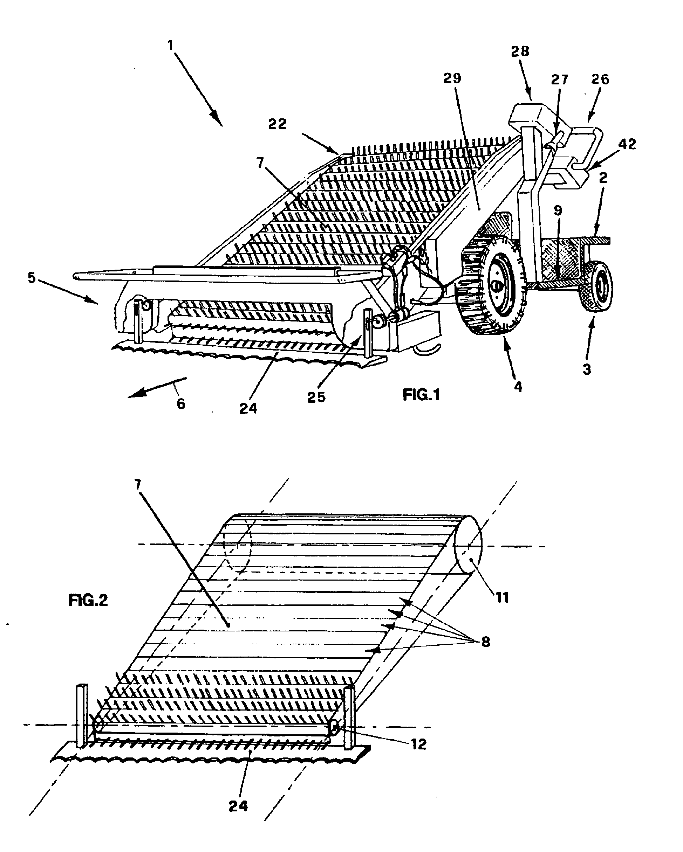

As one can see in Figure 1, the harvesting machine for vegetables of the invention, generally indicated with numeral **1,** comprises a bearing structure **2** mounted on rolling means **3, 4,** wherein a mowing assembly **5,** aligned in a substantially horizontal direction, orthogonal to the advancement direction **6** of the machine **1,** is disposed in the front part of said bearing structure.

The harvesting machine **1** is furthermore provided with a conveying surface **7** consisting of a plurality of combs **8** disposed parallel to each other, able to pick up the material **P** cut downstream the mowing assembly **5** and to convey it to an unloading area **9** disposed on the bearing structure **2.**

According to the invention, the conveying surface **7** comprises a belt **10** loop-wound around rotation means **11, 12,** wherein each of the combs **8** is made of a plurality of mainly longitudinally developed flexible laminar bodies **13,** transversally disposed with respect to the belt **10.**

The laminar bodies **13** have on their length an edge **13a** transversally fastened to the belt **10** through proper fastening means **14** consisting of heat seals, and the edge **13b,** opposite to the edge **13a,** provided with a plurality of harvesting teeth **15.**

In other executive embodiments, the laminar bodies could be fastened to the belt surface also by stitches, adhesives or with other means of known per se type.

The different flexible laminar bodies **13** are coupled with the surface of the belt **10** in a transverse direction with respect to the advancement direction **16,** said bodies being disposed substantially parallel to each other.

Each laminar body **13** could be extended for the entire width of the belt **10** or, alternatively, a number of bodies disposed side by side could be disposed according to the transverse direction of the belt **10.**

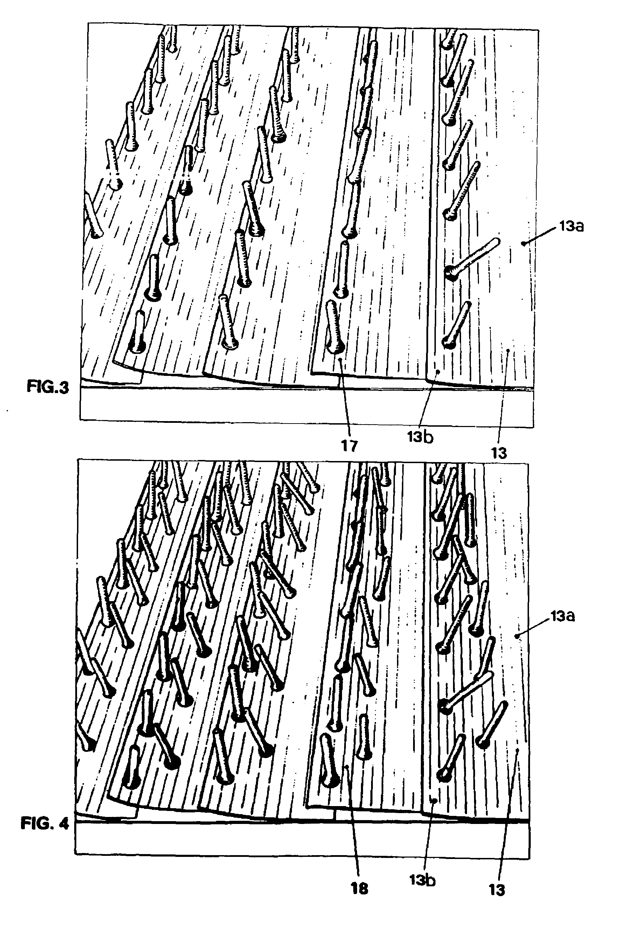

Concerning the harvesting teeth **15** coupled with the free edge **13b** of each flexible laminar body **13,** they are disposed spaced to each other along a single row **17,** as shown in Figure 3, or disposed staggered on more rows **18,** as shown in Figure 4.

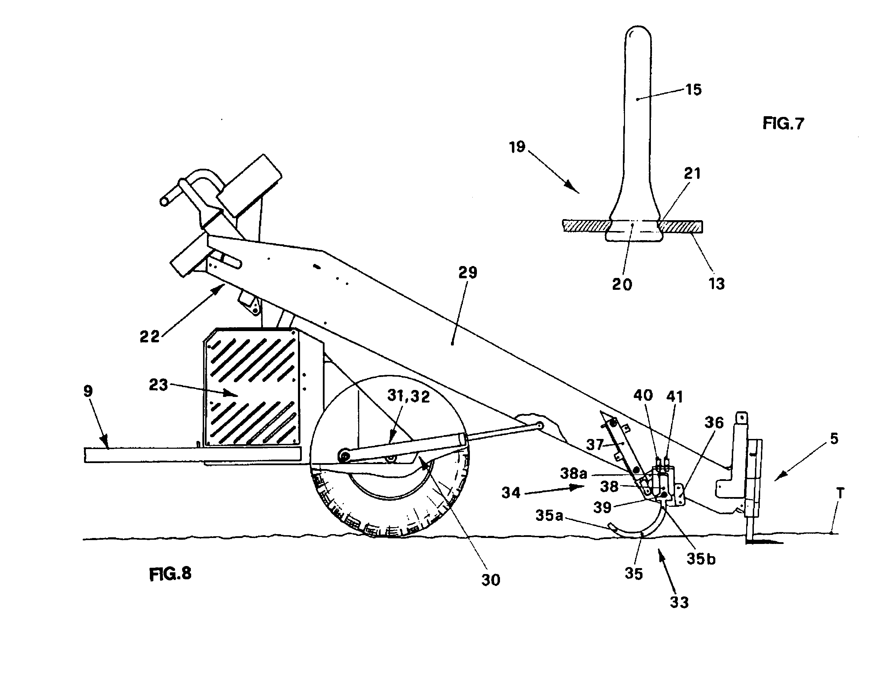

Each tooth **15** is coupled with the laminar body **13** through connection means **19,** shown in Figure 7, consisting of shaped profiles **20** able to be snap fitted in a hole **21** obtained on said laminar body **13.**

In other executive embodiments, the connection means of each tooth to the laminar body are of screw-nut/screw type and/or other systems known per se.

In the executive embodiment shown in the annexed figures of drawings, the harvesting teeth **15** are made of rubber, but they could be made of plastic or metallic material in other embodiments of the machine of the invention, according to the kind of soil and product to be harvested.

Concerning the conveying belt **10,** it is loop-wound around the above-mentioned rotation means consisting of a driving drum **11** and a return drum **12,** the driving drum **11** being actuated, through mechanical transmission means **22,** by the same driving unit **23** which allows the advancement of the harvesting machine **1**.

In this way, the advancement of the conveying surface **7** is synchronized with the advancement speed of the machine **1** and, consequently, to the quantity of product **P** cut by the mowing assembly **5.**

In other executive embodiments, the conveying surface could be actuated by an independent motor, preferably but not necessarily a hydraulic motor, thus operating independently from the advancement speed of the machine.

The flexible laminar bodies **13,** which form the harvesting combs **8** and the belt **10** of the conveying surface **7,** are generally made of a cloth covered with a synthetic material or of a mesh, to better drain the water and earth harvested with the vegetables **P.**

The mowing assembly **5,** consisting of a mowing blade **24** coupled with driving means **25** able to give it an alternate movement, is disposed on the front part of the machine.

Alternatively, the mowing assembly could consist of a belt saw whose blade is disposed in a substantially horizontal direction, orthogonal to the advancement direction of the harvesting machine.

In further embodiments, the mowing assembly could consist of a plurality of rotating disc saws of known per se type, actuated by one or more hydraulic or electric motors able to give a continuous rotary or reciprocating movement to each saw disc.

The rotating disc profile could be smooth or provided with cutting teeth.

Concerning the rolling means **3, 4** coupled with the bearing structure **2,** they consist of tired wheels for the advancement of the machine **1** on the harvesting soil T, wherein the front wheels **4** are coupled, through transmission means, to a driving unit **23** consisting of an internal combustion engine able to make the machine **1** self-propelled, while the rear wheels **3** are able to steer to allow the machine **1** to easily move on the soil **T.**

In other executive embodiments, the rolling means could also consist of tracks, able to improve the machine grip on the soil, especially in case of rugged and steep lands.

In this case, the possibility to perform bends and/or changes of direction is obtained by varying the speed of one track with respect to the other.

Furthermore, the machine of the invention could be provided without the driving unit, being connected in this case, through proper connection means, to an agricultural vehicle suitable for moving it on the harvesting soil.

The advancement of the machine **1** and the control of the steering wheels **3** are performed through control means **26**, for example of joystick **27** type, arranged on a console **28** coupled with the bearing structure **2** of the machine **1.**

As one can see in Figure 8, the bearing structure 2 supports an auxiliary frame **29,** overhanging on the front part of the machine **1** with respect to the advancement direction of said machine, indicated by the arrow **6.**

The auxiliary frame **29,** supporting the aforementioned conveying surface **7** and mowing assembly **5,** is joined to the bearing structure **2** of the machine **1** through a driving unit **30,** able to move said frame to keep constant the position of the mowing assembly **5** with respect to the material **P** to be cut according to the morphology of the soil **T.**

The driving unit **30** comprises actuation means **31, 32,** preferably but not necessarily consisting of hydraulic actuators interposed between the bearing structure **2** and the auxiliary frame **29** and feeler means **33** disposed in contact with the soil **T** to detect its morphology.

The actuation means **31, 32** and the feeler means **33** are mutually connected through a transducer group **34,** able to convert the displacement signal detected by the feeler means **33** in contact with the soil **T** into an electric control signal for the actuation means **31, 32** of the auxiliary frame **29,** to which the conveying surface **7** and the mowing assembly 5 are joined.

In this way, the auxiliary frame **29** can be displaced with respect to the bearing structure **2,** in order to maintain constant the position of the mowing blade **24** with respect to the product **P** to be harvested according to the morphology of the soil **T.**

The variation of the morphology of the soil **T** is detected through the feeler means **33** disposed on the front part of the auxiliary frame **29,** downstream the mowing assembly **5.**

However, in other embodiments, the feeler means could also be disposed upstream the mowing assembly, to anticipate the detection of the soil morphology variations and to properly provide for the correction of the mowing assembly position.

As one can see in Figure 8, the feeler means **33** consist of a bent rod **35,** having an end **35a** suitable to be put in contact with the soil **T,** while the opposite end **35b** is hinged to a supporting bracket **36** coupled with the auxiliary frame **29** through adjustment means **37** able to change the distance of said feeler means from the frame **29** in order to modify the position of the mowing blade **24** with respect to the product **P** to be cut.

Each feeler rod **35** is mechanically connected to a detection rod **38,** it too hinged on the same axis **39** of the feeler rod **35,** whose end **38a** is disposed between two photoelectric cells **40, 41.**

The displacement of the feeler rod **35,** in contact with the soil **T** during the advancement of the machine **1,** causes the detection rod 38 to be displaced and disposed facing the front **41** or the rear **40** photoelectric cell, according to whether the machine **1** runs into a rise or a depression.

When the detection rod end **38a** is disposed in front of the photoelectric cell **40, 41,** it sends an electric control signal to the driving means of the linear hydraulic actuators **31, 32,** which lower or raise the auxiliary frame **29** to adapt the position of the mowing blade **24** to the morphology of the soil **T.**

The machine **1** of the invention is furthermore provided with control means **42** able to set the response speed of the actuator means **31, 32** of the auxiliary frame **29** to the controls received by the feeler means **33** through each transducer group **34.**

For example, said control means **42** allow to delay the response of the actuator means **31, 32** of the auxiliary frame **29** when the soil **T** is particularly uneven, to avoid the continuous bouncing of the machine **1** during the advancement.

Operatively, the mowing blade **24** penetrates in the soil **T** for a variable depth, according to the product **P** to be harvested.

The reciprocating motion of the mowing blade **24,** as the machine **1** is moving forward, provides for cutting the root of the seedlings **P** below the soil level, at the collar **C** of said seedlings, to maintain the leaves joined together.

Subsequently, the seedlings **P** are harvested through the teeth **15** of each comb **8** of the conveying surface **7,** said teeth, by their rotation, vertically lifting the seedling **P** and allowing it to be positioned in the spaces defined between the combs **8.**

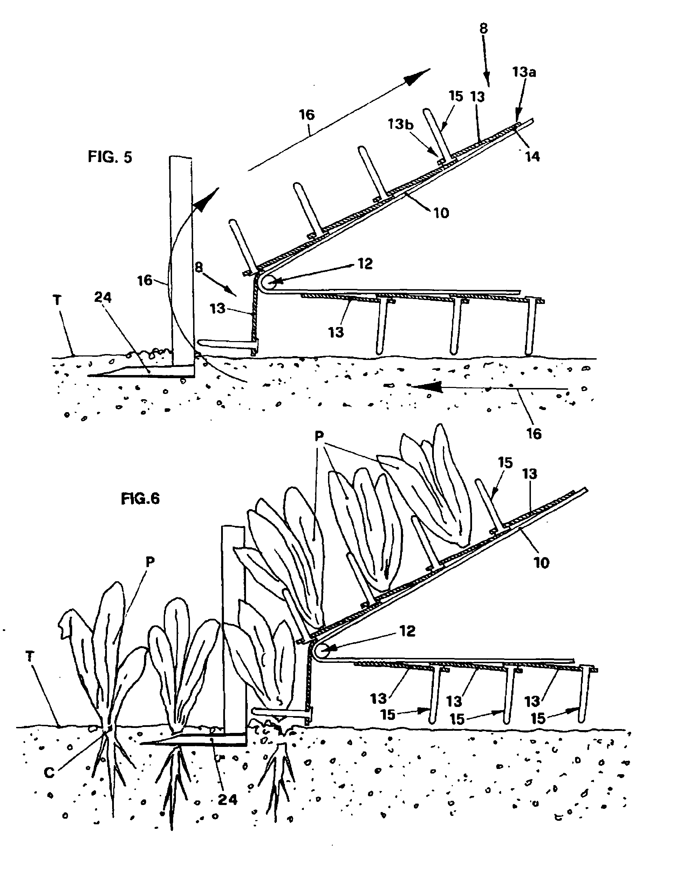

The rotation of the conveying belt **10** around the return drum **12** disposed downstream the mowing assembly **5** allows each laminar body **13** to travel along the path, shown in Figures 5 and 6, suitable for lifting and harvesting each seedling **P.**

The lifting motion of the seedlings **P** performed by the laminar bodies **13** takes place when the belt **10** is at the return drum **12** which has, as one can see in Figure 5, a smaller diameter with respect to the thickness of the laminar body **13.**

Subsequently, the seedlings **P** are conveyed from the conveying surface **7** to the rear unloading area **9,** located on the bearing structure **2** of the machine **1,** where the operators pick them up and put them in proper containers.

In particular, near the unloading area **9,** the operators manually pick up the seedlings **P** from the conveying surface **7** in motion.

It is evident that the presence of a continuous conveying surface **7** and flexible harvesting teeth **15** makes easier and safer to pick up the seedlings **P.**

On the basis of the aforesaid description, it should be understood that the harvesting machine of the invention achieves all the intended objects.

In particular, it is achieved the object to provide for a harvesting machine for vegetables in which the vegetables can be picked up from the conveying surface in an easy way and without safety risks for the operator employed on such operation, while the conveying surface is maintained in motion.

The presence of a continuous conveying belt, provided with combs having flexible teeth, makes safe to manually pick up the vegetables even if the conveying surface is in motion, in accordance with the rules in force regulating the safety in workplaces.

It is achieved the object to provide for a harvesting machine which does not require particular maintenance operations for the conveying surface of the vegetables.

Indeed, it is evident that the conveying belt, due to its intrinsic features, does not require the maintenance interventions typical of the mechanical components described in the cited prior art.

It is achieved the object to provide for a harvesting machine which is constructively easier and lighter with respect to the cited prior art.

Modifications and variations to the harvesting machine of the invention, not described and not shown in the drawings, could be introduced in the executive stage.

All the described and any other not cited embodiments, if they fall within the scope of protection of the following claims, should be intended as protected by the present patent.

## Claims

1. A harvesting machine (1) for vegetables, comprising:
- a bearing structure (2) mounted on rolling means (3, 4);
- a mowing assembly (5) disposed in the front part of said bearing structure (2), aligned in a substantially horizontal direction, orthogonal to the advancement direction (6) of said machine (1);
- a conveying surface (7) consisting of a plurality of combs (8) disposed parallel to each other, able to pick up the material (P) cut downstream said mowing assembly (5) and to convey it to an unloading area (9) disposed on said bearing structure (2),
**characterized in that** said conveying surface (7) comprises at least a belt (10) loop-wound around rotation means (11, 12), wherein each of said combs (8) is made of a plurality of mainly longitudinally developed flexible laminar bodies (13), transversally disposed with respect to said belt (10), said laminar bodies (13) having an edge (13a) on their length fastened to said belt (10) and the opposite edge (13b) provided with a plurality of harvesting teeth (15).

2. The harvesting machine (1) according to claim 1) **characterized in that** said harvesting teeth (15) are disposed spaced to each other along one or more rows (17, 18) at said free edge (13b) of each of said laminar bodies (13).

3. The harvesting machine (1) according to claim 1) **characterized in that** said flexible laminar bodies (13) are fastened to the surface of said conveying belt (10) through fastening means (14).

4. The harvesting machine (1) according to claim 3) **characterized in that** said fastening means (14) consist of heat seals.

5. The harvesting machine (1) according to claim 3) **characterized in that** said fastening means consist of adhesives.

6. The harvesting machine (1) according to claim 3) **characterized in that** said fastening means consist of stitches.

7. The harvesting machine (1) according to claim 1) **characterized in that** said harvesting teeth (15) are coupled with said laminar bodies (13) through connection means (19).

8. The harvesting machine (1) according to claim 7) **characterized in that** said connection means are of screw-nut/screw type.

9. The harvesting machine (1) according to claim 7) **characterized in that** said connection means (19) consist of shaped profiles (20) able to be snap fitted.

10. The harvesting machine (1) according to claim 1) **characterized in that** said flexible laminar bodies (13) comprise a cloth covered with a synthetic material.

11. The harvesting machine (1) according to claim 1) **characterized in that** said harvesting teeth are made of a metallic material.

12. The harvesting machine (1) according to claim 1) **characterized in that** said harvesting teeth are made of a plastic material.

13. The harvesting machine (1) according to claim 1) **characterized in that** said harvesting teeth (15) are made of rubber.

14. The harvesting machine (1) according to claim 1) **characterized in that** said rotation means (11, 12) comprise one or more drums.

15. The harvesting machine (1) according to claim 14) **characterized in that** at least one of said drums is motorized.

16. The harvesting machine (1) according to claim 1) **characterized in that** said rotation means (11, 12) comprise at least a return drum.

17. The harvesting machine (1) according to claim 1) **characterized in that** said conveying belt (10) comprises a cloth covered with a synthetic material.

18. The harvesting machine (1) according to claim 1) **characterized in that** said conveying belt consists of a mesh.

19. The harvesting machine (1) according to claim 1) **characterized in that** said conveying surface (7) is coupled with an auxiliary frame (29) supported by said bearing structure (2) and provided with a driving unit (30) able to move said auxiliary frame (29) to maintain constant the position of said mowing assembly (5) with respect to the material (P) to be cut, according to the morphology of the soil (T), said driving unit (30) comprising feeler means (33) disposed in contact with the soil (T) able to detect its morphology and actuation means (31, 32) coupled with said bearing structure (2), mutually connected through a transducer group (34) able to convert the displacement signal detected by said feeler means (33) into an electric control signal for said actuation means (31, 32).

20. The harvesting machine (1) according to claim 19) **characterized in that** said transducer group (34) comprises at least a pair of photoelectric cells (40, 41) electrically connected to driving means of said actuators (31, 32) which cooperate with a mobile detection rod (38) disposed between said photoelectric cells (40, 41) and mechanically connected to said feeler means (33).

21. The harvesting machine (1) according to claim 19) **characterized in that** said feeler means (33) are connected to said auxiliary frame (29) through adjustment means (37) able to change the distance of said feeler means (33) from said auxiliary frame (29) in order to modify the position of said mowing assembly (5) with respect to said product (P) to be cut.

22. The harvesting machine (1) according to claim 1) **characterized in that** said mowing assembly (5) comprises a mowing blade (24) provided with driving means (25) able to give it a reciprocating motion.

23. The harvesting machine (1) according to claim 1) **characterized in that** said mowing assembly comprises a belt saw actuated by a hydraulic motor.

24. The harvesting machine (1) according to claim 1) **characterized in that** said mowing assembly comprises a plurality of rotating disc saws.

25. The harvesting machine (1) according to claim 24) **characterized in that** said rotating disc saws are actuated by hydraulic motors.

26. The harvesting machine (1) according to claim 24) **characterized in that** said rotating disc saws are actuated by electric motors.

27. The harvesting machine (1) according to claim 1) **characterized in that** said rolling means (3, 4) consist of tired wheels.

28. The harvesting machine (1) according to claim 1) **characterized in that** said rolling means consist of tracks.

29. The harvesting machine (1) according to claim 1) **characterized in that** it is provided with a driving unit (23) coupled with said rolling means (3, 4), able to make said machine (1) self-propelled.

30. The harvesting machine (1) according to claim 1) **characterized in that** said conveying belt (10) is actuated by an hydraulic motor.

31. The harvesting machine (1) according to claim 1) **characterized in that** it is provided with transmission means (22) able to transmit the motion of said conveying belt (10) to said rolling means (3, 4) to synchronize the winding speed of said belt (10) with the advancement speed of said machine (1).

32. The harvesting machine (1) according to claim 19) **characterized in that** said feeler means (33) are disposed downstream said mowing assembly (5).

33. The harvesting machine (1) according to claim 19) **characterized in that** said feeler means are disposed upstream said mowing assembly.

## Patentansprüche

1. Erntemaschine (1) für Pflanzen, umfassend:
- eine Lagerstruktur (2), die an Rollmittel (3, 4) angebracht ist;
- eine Mähanordnung (5), die am Vorderabschnitt der Lagerstruktur (2) in im Wesentlichen horizontaler Richtung angeordnet ist, orthogonal zur Vorwärts-Bewegungsrichtung (6) der Maschine (1);
- eine Förderoberfläche (7), die aus einer Vielzahl an parallel zueinander angeordneten Kämmen (8) besteht, die imstande sind, das geschnittene Material (P) stromabwärts der Mähanordnung (5) aufzunehmen und zu einem Entladebereich (9) zu befördern, der auf der Lagerstruktur (2) angeordnet ist,
**dadurch gekennzeichnet, dass** die Förderoberfläche (7) zumindest einen Gurt (10) umfasst, der in einer Schleife um Rotationsmittel (11, 12) gelegt ist, worin jeder Kamm (8) aus einer Vielzahl an hauptsächlich längs verlaufenden, biegsamen Lamellenkörpern (13), die in Bezug auf den Gurt (10) transversal angeordnet sind, gebildet ist, wobei die Lamellenkörper (13) entlang ihrer Länge einen am Gurt (10) angebrachten Rand (13a) aufweisen und der andere Rand (13b) mit einer Vielzahl an Erntezähnen (15) versehen ist.

2. Erntemaschine (1) nach Anspruch 1), **dadurch gekennzeichnet, dass** die Erntezähne (15) am freien Rand (13b) eines jeden Lamellenkörpers (13) entlang einer oder mehrerer Reihen (17, 18) zueinander beabstandet angeordnet sind.

3. Erntemaschine (1) nach Anspruch 1), **dadurch gekennzeichnet, dass** die biegsamen Lamellenkörper (13) durch Befestigungsmittel (14) an der Oberfläche des Fördergurts (10) angebracht sind.

4. Erntemaschine (1) nach Anspruch 3), **dadurch gekennzeichnet, dass** die Befestigungsmittel (14) aus Heißsiegeln bestehen.

5. Erntemaschine (1) nach Anspruch 3), **dadurch gekennzeichnet, dass** die Befestigungsmittel aus Klebern bestehen.

6. Erntemaschine (1) nach Anspruch 3), **dadurch gekennzeichnet, dass** die Befestigungsmittel aus Nahtstichen bestehen.

7. Erntemaschine (1) nach Anspruch 1), **dadurch gekennzeichnet, dass** die Erntezähne (15) über Verbindungsmittel (19) mit den Lamellenkörpern (13) verbunden sind.

8. Erntemaschine (1) nach Anspruch 7), **dadurch gekennzeichnet, dass** die Verbindungsmittel vom Typ Schraube und Schraubenmutter sind.

9. Erntemaschine (1) nach Anspruch 7), **dadurch gekennzeichnet, dass** die Verbindungsmittel (19) aus geformten Profilen (20) bestehen, die zur Schnappbefestigung fähig sind.

10. Erntemaschine (1) nach Anspruch 1), **dadurch gekennzeichnet, dass** die biegsamen Lamellenkörper (13) einen mit einem synthetischen Material überzogenen Stoff umfassen.

11. Erntemaschine (1) nach Anspruch 1), **dadurch gekennzeichnet, dass** die Erntezähne aus einem Metallmaterial hergestellt sind.

12. Erntemaschine (1) nach Anspruch 1), **dadurch gekennzeichnet, dass** die Erntezähne aus einem Kunststoffmaterial hergestellt sind.

13. Erntemaschine (1) nach Anspruch 1), **dadurch gekennzeichnet, dass** die Erntezähne (15) aus Gummi hergestellt sind.

14. Erntemaschine (1) nach Anspruch 1), **dadurch gekennzeichnet, dass** die Rotationsmittel (11, 12) eine oder mehrere Trommeln umfassen.

15. Erntemaschine (1) nach Anspruch 14), **dadurch gekennzeichnet, dass** zumindest eine der Trommeln motorisiert ist.

16. Erntemaschine (1) nach Anspruch 1), **dadurch gekennzeichnet, dass** die Rotationsmittel (11, 12) zumindest eine Rückführtrommel umfassen.

17. Erntemaschine (1) nach Anspruch 1), **dadurch gekennzeichnet, dass** der Fördergurt (10) einen mit einem synthetischen Material überzogenen Stoff umfasst.

18. Erntemaschine (1) nach Anspruch 1), **dadurch gekennzeichnet, dass** der Fördergurt aus einem Netz besteht.

19. Erntemaschine (1) nach Anspruch 1), **dadurch gekennzeichnet, dass** die Förderoberfläche (7) mit einem Hilfsrahmen (29) verbunden ist, der von der Lagerstruktur (2) getragen ist und mit einer Antriebseinheit (30) ausgestattet ist, die zum Bewegen des Hilfsrahmens (29) imstande ist, um die Position der Mähanordnung (5) in Bezug auf das zu schneidende Material (P) der Morphologie des Bodens (T) entsprechend konstant zu halten, wobei die Antriebseinheit (30) Abfühlmittel (33), die in Kontakt zum Boden (T) zur Detektion seiner Morphologie angeordnet sind, und Aktuatormittel (31, 32), die mit der Lagerstruktur (2) verbunden sind, umfasst, die über eine Wandlergruppe (34) gegenseitig verbunden sind, welche imstande ist, das von den Abfühlmitteln (33) detektierte Verschiebungssignal in ein elektrisches Steuersignal für die Aktuatormittel (31, 32) umzuwandeln.

20. Erntemaschine (1) nach Anspruch 19), **dadurch gekennzeichnet, dass** die Wandlergruppe (34) zumindest ein Paar von mit den Antriebsmitteln der Aktuatoren (31, 32) elektrisch verbundenen lichtelektrischen Zellen (40, 41) umfasst, die mit einem beweglichen Detektionsstab (38) zusammenwirken, der zwischen den lichtelektrischen Zellen (40, 41) angeordnet und mit den Abfühlmitteln (33) mechanisch verbunden ist.

21. Erntemaschine (1) nach Anspruch 19), **dadurch gekennzeichnet, dass** die Abfühlmittel (33) durch Einstellungsmittel (37) mit dem Hilfsrahmen (29) verbunden sind, die dazu imstande sind, dem Abstand der Abfühlmittel (33) vom Hilfsrahmen (29) zu ändern, um die Position der Mähanordnung (5) in Bezug auf das zu schneidende Produkt (P) zu ändern.

22. Erntemaschine (1) nach Anspruch 1), **dadurch gekennzeichnet, dass** die Mähanordnung (5) ein Mähmesser (24) umfasst, das mit Antriebsmitteln (25) versehen ist, die imstande sind, dieses in eine Vor- und Rückwärtsbewegung zu versetzen.

23. Erntemaschine (1) nach Anspruch 1), **dadurch gekennzeichnet, dass** die Mähanordnung eine Bandsäge umfasst, die von einem Hydraulikmotor betätigt wird.

24. Erntemaschine (1) nach Anspruch 1), **dadurch gekennzeichnet, dass** die Mähanordnung eine Vielzahl an rotierenden Scheibensägen umfasst.

25. Erntemaschine (1) nach Anspruch 24), **dadurch gekennzeichnet, dass** die rotierenden Scheibensägen von Hydraulikmotoren betätigt werden.

26. Erntemaschine (1) nach Anspruch 24), **dadurch gekennzeichnet, dass** die rotierenden Scheibensägen von Elektromotoren betätigt werden.

27. Erntemaschine (1) nach Anspruch 1), **dadurch gekennzeichnet, dass** die Rollmittel (3, 4) aus bereiften Rädern bestehen.

28. Erntemaschine (1) nach Anspruch 1), **dadurch gekennzeichnet, dass** die Rollmittel aus Raupenketten bestehen.

29. Erntemaschine (1) nach Anspruch 1), **dadurch gekennzeichnet, dass** sie mit einer Antriebseinheit (23) ausgestattet ist, die mit den Rollmitteln (3, 4) verbunden ist und imstande ist, die Maschine (1) selbstfahrend zu machen.

30. Erntemaschine (1) nach Anspruch 1), **dadurch gekennzeichnet, dass** der Fördergurt (10) von einem Hydraulikmotor betätigt wird.

31. Erntemaschine (1) nach Anspruch 1), **dadurch gekennzeichnet, dass** sie mit Transmissionsmitteln (22) ausgestattet ist, die dazu imstande sind, die Bewegung des Fördergurts (10) an die Rollmittel (3, 4) zu übertragen, um die Umlaufgeschwindigkeit des Fördergurts (10) mit der Fortbewegungsgeschwindigkeit der Maschine (1) zu synchronisieren.

32. Erntemaschine (1) nach Anspruch 19), **dadurch gekennzeichnet, dass** die Abfühlmittel (33) stromabwärts der Mähanordnung (5) angeordnet sind.

33. Erntemaschine (1) nach Anspruch 19), **dadurch gekennzeichnet, dass** die Abfühlmittel stromaufwärts der Mähanordnung angeordnet sind.

## Revendications

1. Une ramasseuse (1) pour produits horticoles, comprenant:
- une structure de support (2) assemblée sur des moyens de roulement (3, 4);
- un groupe de fauchage (5) disposé dans la partie avant de ladite structure de support (2), aligné dans une direction essentiellement horizontale, orthogonale à la direction d'avance (6) de ladite ramasseuse (1);
- une surface de transport (7) constituée d'une pluralité de peignes (8) situés l'un parallèle à l'autre en mesure de ramasser le matériel (P) coupé en aval dudit groupe de fauchage (5) et de le transporter vers une zone de déchargement (9) disposée sur ladite structure de support (2),
**caractérisée en ce que** ladite surface de transport (7) comprend au moins une courroie (10) enroulée en anneau parmi lesdits moyens de rotation (11, 12) où chacun desdits peignes (8) este constitué par une pluralité de corps laminaires flexibles (13) développés principalement d'une manière longitudinale, disposés transversalement par rapport à ladite courroie (10), lesdits corps laminaires (13) ayant un bord (13a) présent sur leur longueur fixé à ladite courroie (10) et le bord opposé (13b) étant muni d'une pluralité de dents de ramassage (15).

2. La ramasseuse (1) selon la revendication 1) **caractérisée en ce que** lesdites dents de ramassage (15) sont espacées l'une de l'autre le long d'une ou plusieurs rangées (17, 18) sur ledit bord libre (13b) de chacun desdits corps laminaires (13).

3. La ramasseuse (1) selon la revendication 1) **caractérisée en ce que** lesdits corps laminaires flexibles (13) sont fixés à la surface de ladite courroie transporteuse (10) par des moyens de fixation (14).

4. La ramasseuse (1) selon la revendication 3) **caractérisée en ce que** lesdits moyens de fixation (14) sont constitués de thermoscellages.

5. La ramasseuse (1) selon la revendication 3) **caractérisée en ce que** lesdits moyens de fixation sont constitués de colles.

6. La ramasseuse (1) selon la revendication 3) **caractérisée en ce que** lesdits moyens de fixation sont constitués de coutures.

7. La ramasseuse (1) selon la revendication 1) **caractérisée en ce que** lesdites dents de ramassage (15) sont accouplées avec lesdits corps laminaires (13) par des moyens de connexion (19).

8. La ramasseuse (1) selon la revendication 7) **caractérisée en ce que** lesdits moyens de connexion sont du type vis - écrou.

9. La ramasseuse (1) selon la revendication 7) **caractérisée en ce que** lesdits moyens de connexion (19) sont constitués de profils façonnés (20) à encastrement.

10. La ramasseuse (1) selon la revendication 1) **caractérisée en ce que** lesdits corps laminaires flexibles (13) comprennent un tissu revêtu de matériel synthétique.

11. La ramasseuse (1) selon la revendication 1) **caractérisée en ce que** lesdites dents de ramassage sont réalisées en matériel métallique.

12. La ramasseuse (1) selon la revendication 1) **caractérisée en ce que** lesdites dents de ramassage sont réalisées en matériel plastique.

13. La ramasseuse (1) selon la revendication 1) **caractérisée en ce que** lesdites dents de ramassage (15) sont réalisées en caoutchouc.

14. La ramasseuse (1) selon la revendication 1) **caractérisée en ce que** lesdits moyens de rotation (11, 12) comprennent un ou plusieurs tambours.

15. La ramasseuse (1) selon la revendication 14) **caractérisée en ce qu'**au moins un desdits tambours est motorisé.

16. La ramasseuse (1) selon la revendication 1) **caractérisée en ce que** lesdits moyens de rotation (11, 12) comprennent au moins un tambour de retour.

17. La ramasseuse (1) selon la revendication 1) **caractérisée en ce que** ladite courroie transporteuse (10) comprend un tissu revêtu de matériel synthétique.

18. La ramasseuse (1) selon la revendication 1) **caractérisée en ce que** ladite courroie transporteuse consiste d'un grillage.

19. La ramasseuse (1) selon la revendication 1) **caractérisée en ce que** ladite surface de transport (7) est accouplée avec un châssis auxiliaire (29) soutenu par ladite structure de support (2) et équipé d'une unité d'actionnement (30) apte à déplacer ledit châssis auxiliaire (29) pour maintenir constante la position dudit groupe de fauchage (5) par rapport au matériel (P) à couper, selon la morphologie du terrain (T), ladite unité d'actionnement (30) comprenant des moyens tâteurs (33) mis en contact avec le terrain (T) indiqués pour détecter sa morphologie et des moyens actionneurs (31, 32) accouplés avec ladite structure de support (2), reliés entre eux au moyen d'un groupe transducteur (34) apte à convertir le signal de déplacement détecté par lesdits moyens tâteurs (33) en un signal de contrôle électrique pour lesdits moyens actionneurs (31, 32).

20. La ramasseuse (1) selon la revendication 19) **caractérisée en ce que** ledit groupe transducteur (34) comprend au moins une paire de cellules photoélectriques (40, 41) reliées électriquement à des moyens d'actionnement desdits moyens actionneurs (31, 32) qui coopèrent avec une barre de détection mobile (38) disposée entre lesdites cellules photoélectriques (40, 41) et reliée mécaniquement auxidits moyens tâteurs (33).

21. La ramasseuse (1) selon la revendication 19) **caractérisée en ce que** lesdits moyens tâteurs (33) sont reliés audit châssis auxiliaire (29) par des moyens de réglage (37) aptes à changer la distance desdits moyens tâteurs (33) dudit châssis auxiliaire (29) pour modifier la position dudit groupe de fauchage (5) par rapport audit produit (P) à couper.

22. La ramasseuse (1) selon la revendication 1) **caractérisée en ce que** ledit groupe de fauchage (5) comprend une lame de fauchage (24) équipée de moyens d'actionnement (25) aptes à exercer sur celle-ci un mouvement alternatif.

23. La ramasseuse (1) selon la revendication 1) **caractérisée en ce que** ledit groupe de fauchage comprend une scie à ruban actionnée par un moteur hydraulique.

24. La ramasseuse (1) selon la revendication 1) **caractérisée en ce que** ledit groupe de fauchage comprend une pluralité de scies à disque tournant.

25. La ramasseuse (1) selon la revendication 24) **caractérisée en ce que** lesdites scies à disque tournant sont actionnées par des moteurs hydrauliques.

26. La ramasseuse (1) selon la revendication 24) **caractérisée en ce que** lesdites scies à disque tournant sont actionnées par des moteurs électriques.

27. La ramasseuse (1) selon la revendication 1) **caractérisée en ce que** lesits moyens de roulement (3, 4) consistent de roues à bandage.

28. La ramasseuse (1) selon la revendication 1) **caractérisée en ce que** ledits moyens de roulement consistent de chenilles.

29. La ramasseuse (1) selon la revendication 1) **caractérisée en ce qu'**elle est dotée d'une unité d'actionnement (23) accouplée avec ledits moyens de roulement (3, 4), indiquée pour rendre ladite ramasseuse (1) automotrice.

30. La ramasseuse (1) selon la revendication 1) **caractérisée en ce que** ladite courroie transporteuse (10) est actionnée par un moteur hydraulique.

31. La ramasseuse (1) selon la revendication 1) **caractérisée en ce qu'**elle est dotée de moyens de transmission (22) indiqués pour tansmettre le mouvement de ladite courroie transporteuse (10) auxdits moyens de roulement (3, 4) pour synchroniser la vitesse d'enroulement de ladite courroie (10) avec la vitesse d'avancement de ladite ramasseuse (1 ).

32. La ramasseuse (1) selon la revendication 19) **caractérisée en ce que** lesdits moyens tâteurs (33) sont disposés en aval dudit groupe de fauchage (5).

33. La ramasseuse (1) selon la revendication 19) **caractérisée en ce que** lesdits moyens tâteurs sont disposés en amont dudit groupe de fauchage.
